# EUROPEAN PATENT SPECIFICATION

(11) **EP 2 953 801 B1**
(45) Date of publication and mention of the grant of the patent: **16.05.2018**
(21) Application number: 14716919.7
(22) Date of filing: 03.02.2014
(51) Int. Cl.: B60C 11/16

(54) **A STUDDED TYRE AND A METHOD FOR IMPROVING THE PERFORMANCE OF A STUDDED TYRE**
REIFEN MIT SPIKES UND VERFAHREN ZUR VERBESSERUNG DER LEISTUNG DES REIFENS MIT SPIKES
PNEU À CRAMPONS ET PROCÉDÉ D'AMÉLIORATION DE LA PERFORMANCE D'UN PNEU À CRAMPONS

(30) Priority: 06.02.2013 IT PD20130025; 15.03.2013 US 201361792292 P
(43) Date of publication of application: 16.12.2015
(73) Proprietor: Pirelli Tyre S.p.A., 20126 Milano (IT)
(72) Inventor: TROMBIN, Andrea, I-20126 Milano (IT); LEENDERTSE, Jaap, I-20126 Milano (IT); LORENZETTI, Daniele, I-20126 Milano (IT); BOIOCCHI, Maurizio, I-20126 Milano (IT)
(74) Representative: Susanetto, Carlo
(86) International application number: PCT/IB2014/058755
(87) International publication number: WO 2014/122570

(56) References cited:
- EP-A1- 1 661 734
- EP-A1- 2 540 527
- FR-A- 447 945

## Description

The present invention relates to a studded tyre. The reduced coefficient of friction of the rubber-ice interface makes the road-holding of a tyre travelling on an icy surface particularly problematic. In order to remedy this drawback, widespread use is made, especially in countries with very harsh winter climates, of tyres to whose tread band projecting members, known as "studs", are appropriately secured and are able to cut into the icy surface, thus ensuring that the tyre adequately grips this type of road surface as well. The cutting action on the icy surface is typically carried out by a pin of the stud projecting from the tread band.

Documents US 8 113 250, US 2002/050312, US 2012/0227880, EP 1798069 A2, WO 2009/68744 A1, WO 2012/117962 A1 disclose studded tyres and/or various types of studs for use with studded tyres.

EP 2540527 discloses further examples of studs for use in a studded tyre.

The Applicants have addressed the problem of improving the performance of a studded tyre on icy and/or snow-covered surfaces. In general, improving the performance of a studded tyre may include an increase in the starting traction and/or a reduction of the braking distance. These parameters may be measured by tests in which the starting acceleration from stationary and the braking distance from a predetermined speed to zero are respectively assessed, for a vehicle equipped with studded tyres, on an icy and/or snow-covered surface. Improved performance is preferably also assessed by handling tests relating to the handling of vehicles equipped with studded tyres travelling on icy and/or snow-covered surfaces. These tests are typically carried out by professional testers able to assess various aspects of the vehicle's handling.

The Applicant has carried out various experiments using studs with pins having a non-symmetrical configuration in plan view, and having a profile with one or a plurality of tips in a portion of said configuration in plan view, and a planar profile in an opposite portion.

The Applicant has surprisingly found that it is possible to improve the performance of a studded tyre comprising said studs, by positioning at least some of said studs such that the tip or tips of the respective pins face in a direction opposite the advancing direction of the tyre. The Applicant has in particular discovered that a particularly efficient configuration is one in which the studs are disposed such that the respective pins have tips facing in the advancing direction of the tyre in the central portion of the tread band of the tyre, and tips facing in the direction opposite the advancing direction of the tyre in the lateral portions of the tread band of the tyre.

According to a first aspect, the invention relates to a studded tyre according to claim 1.

According to the invention, a first plurality of said studs is disposed such that the respective pins have their respective tips facing in a direction substantially opposite to an advancing direction of said tyre. Preferably, at least 30%, and more preferably 40%, of the overall studs inserted in the tread band of the tyre are disposed in this configuration.

The present invention, in at least one of its above-mentioned aspects, may include at least one of the preferred features described below.

Preferably, a second plurality of studs is disposed such that the pins have their respective tips facing substantially towards said advancing direction of said tyre.

Preferably, said first plurality of studs is positioned in lateral portions of said tread band.

Preferably, said second plurality of studs is positioned in a central portion of said tread band.

Preferably, said first side of the configuration in plan view of said pin has a profile on which at least two tips are defined.

Preferably, the second side of the configuration in plan view of said pin is included in a portion of substantially trapezoidal shape of the configuration in plan view of said pin, opposite said at least one tip.

Preferably, the configuration in plan view of said pin is elongate and has a main direction of extension. The studs of said plurality of studs may be positioned such that said main direction of extension extends substantially parallel to an axis of rotation of said tyre.

Preferably, said base has a configuration in plan view on which a first side and an opposite second side are defined and disposed substantially parallel to an axis of rotation of said tyre.

Preferably, the first side of said base has a greater extension than the second side of said base.

Preferably, said base has a substantially trapezoidal configuration in plan view, the first side representing a longer base of the trapezium and the second side representing a shorter base of the trapezium.

Preferably, the first side of the configuration in plan view of said pin is disposed in a direction concordant with the first side of said base of the stud.

Preferably, said head has a configuration in plan view in which a first side and an opposite second side are defined and disposed substantially parallel to the axis of rotation of said tyre.

Preferably, the first side of said head has a smaller extension than the second side of said head.

Preferably, said head of the stud has a configuration in plan view which is substantially trapezoidal.

Preferably, said first side of said head represents a shorter base of said trapezium and said second side of said head represents a longer base of said trapezium.

Preferably, said first side of the configuration in plan view of said pin is positioned in a direction concordant with said first side of said head.

Preferably, said head of said stud has a configuration in plan view having an area of dimensions reduced by a proportional factor of between about 1.2 and about 2.5 with respect to the area of the configuration in plan view of said base of said stud.

Preferably, the tyre is of directional type. A tyre is defined as "directional" when it has a tread pattern configured to have a preferential direction of rotation, typically coinciding with the direction of rotation of the tyre when mounted on a forward-travelling vehicle .

In the present specification, the "configuration in plan view" of a stud or a component thereof means the orthogonal projection of said stud or component in a plane perpendicular to a longitudinal axis of said stud.

In the present specification, a "substantially trapezoidal" configuration in plan view means a configuration in plan view generically analogous to the geometric figure of a trapezium; that definition also includes simple variations of that shape such as, for instance, a trapezium with rounded vertices or with slightly curved sides or sides with sporadic discontinuities such as small projections or small recesses.

In the present specification, the terms "substantially perpendicular" and/or "substantially parallel", referring to two generic directions, are also understood to include non-significant deviations from exact perpendicular and parallel directions, for instance within an angle of deviation of about 20-25° with respect to exactly perpendicular and/or parallel directions.

Similarly, in the present specification, the terms "in a direction substantially opposite to the advancing direction", "in a direction substantially in the advancing direction", "in a direction substantially concordant with the advancing direction" of the tyre are also understood to include non-significant deviations from exactly opposite or concordant directions with respect to the advancing direction of the tyre, for instance directions deviating by an angle of about 20-25° from an exactly opposite or concordant direction with respect to the advancing direction of the tyre.

The features and advantages of the invention will become clear from the following detailed description of embodiments thereof, given with reference to the accompanying drawings which are provided purely by way of non-limiting example and in which:
- Fig. 1 is a diagrammatic perspective view of a studded tyre;
- Fig. 2 is a view, on an enlarged scale and in partial cross-section, of a portion of the studded tyre of Fig. 1;
- Figs. 3 to 6 are respectively a view in lateral perspective, a top view, a front elevation and a lateral elevation from the left of a stud of the studded tyre of Fig. 1;
- Fig. 7 shows a first preferred arrangement of studs in the tyre of Fig. 1;
- Fig. 8 shows a second preferred arrangement of studs in the tyre of Fig. 1;
- Fig. 9 shows a third preferred arrangement of studs in the tyre of Fig. 1.

With reference to the attached drawings, a studded tyre is shown overall by 1.

The tyre 1 generally comprises, in a radially outer position, a tread band 2, shaped as a toroid about an axis of rotation X of said tyre 1, which is disposed in a radially outer position on a belt structure of said tyre 1 according to a configuration which is known per se in the relevant technical field.

In turn, the belt structure is coupled in a radially outer position to a carcass structure, both known per se and not shown in the appended drawings.

The tread band 2 is made from elastomer material and is provided with a radially outer tread surface 3 designed to bring said tyre 1 into contact with the road surface during its rolling motion about the axis X.

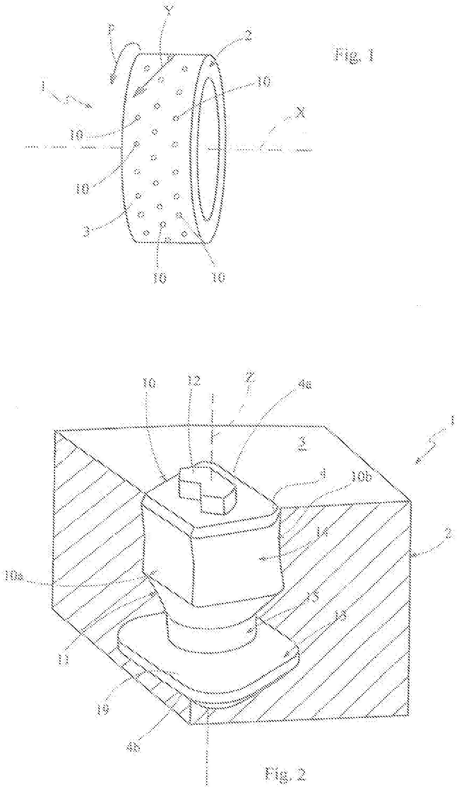

The tyre 1 is preferably of the directional type such that it has a preferential rolling direction shown by F in Fig. 1. In this way, an advancing direction Y tangential to the tread surface 3 and oriented in the rolling direction F is defined for each point of the tread surface 3.

A plurality of holes 4, identical with one another and positioned in an appropriate manner along the extension of the tread surface 3, is provided on the tread band 2. In greater detail, holes 4 are preferably obtained in a central portion and in lateral portions of said tread band 2.

Each hole 4, preferably cylindrical, extends in a substantially radial direction and has an opening 4a at the tread surface 3 and a closed base 4b on the longitudinally opposite side.

Each hole 4 houses in engagement a corresponding stud 10 comprising a body 11, housed in said hole 4 and extending along a longitudinal axis Z, and a pin 12, extending longitudinally from said body 11 so as to project from the tread surface 3 through the opening 4a externally to the hole 4.

As a result of the resilience of the elastomer material from which the tread band 2 is made and the predetermined dimensions of the hole 4, the walls of the tread band 2 bounding the hole 4 are in direct contact substantially with the whole surface of the body 11, apart from the surface from which the pin 12 extends, and exert an action on the body 11 that retains the stud 10 within the hole 4.

Each stud 10 has a first surface 10a and an opposite second surface 10b which may be defined as the projections of said stud 10 in a radial plane R passing through the longitudinal axis Z provided in the advancing direction Y and in the opposite direction, or vice versa.

The body 11 of the stud 10 is preferably made from metal material, for instance steel, and comprises, on longitudinally opposite sides, a base 13 and a head 14 connected together by a stem 15 extending along the longitudinal axis Z and having a smaller cross-section than the base 13 and the head 14.

The base 13 is housed in a radially inner position in the hole 4 and bears on the base 4b, while the head 14 is housed within the hole 4 in a radially outer position and is substantially flush with the tread surface 3.

The pin 12 is made from a material of high strength and resistance to wear, for instance tungsten carbide, and extends longitudinally from the head 14 so as to project from the hole 4 externally to the tread surface 3.

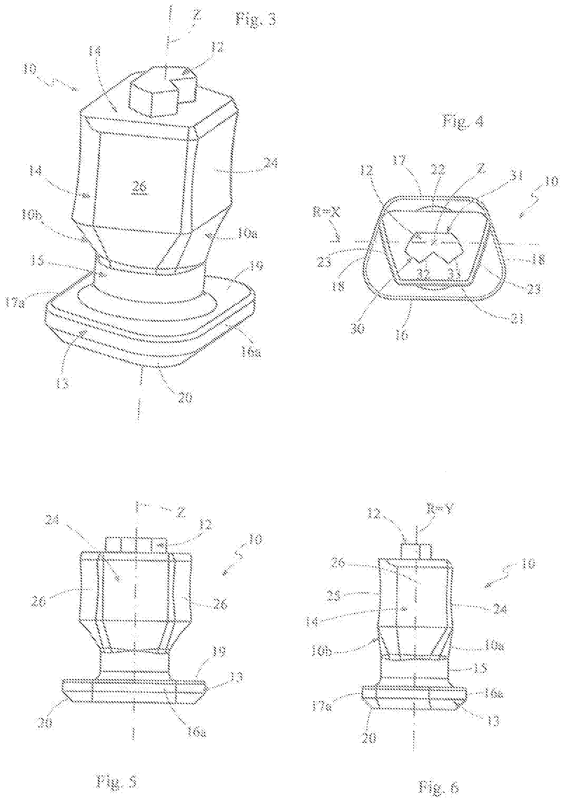

As better shown in Fig. 4, the base 13 has a configuration in plan view of substantially trapezoidal shape, on which a first side 16, belonging to the first surface 10a, and an opposite second side 17, belonging to the second surface 10b, are defined. Said first and second sides are disposed substantially parallel to the axis of rotation X of the tyre 1. They may also be disposed substantially perpendicular to the advancing direction Y. The first side 16 and second side 17 are joined together by opposite lateral flanks 18.

The configuration in plan view of said base 13 may, for instance, be shaped substantially as an isosceles trapezium with rounded vertices, in which the first side 16 of the base 13 represents the longer base of the trapezium, the second side 17 of the base 13 represents the shorter base of the trapezium and the lateral flanks 18 represent the sides of the trapezium.

Preferably, the first side 16 is larger than the second side 17 by a percentage of between about 20% and about 50%. The dimension of the first side 16 may for instance be between about 8 mm and about 11 mm. The dimension of the second side 17 may for instance be between about 5 mm and 9 mm.

The distance between the first side 16 and the second side 17, representing the height of the trapezium, may, for instance, be between about 5 mm and 9 mm.

Towards the head 14, the base 13 has a substantially planar surface 19 perpendicular to the longitudinal direction Z and appropriately coupled to the stem 15, while on the longitudinally opposite side, it has a surface 20 tapering towards the base 4b of the hole 4 so as to facilitate the insertion of the stud 10 in the hole 4 when the tyre 1 is being produced.

The first side 16 and second side 17 of the configuration in plan view of the base 13 are defined respectively by a first edge 16a and a second edge 17a belonging respectively to the first surface 10a and the second surface 10b. The first edge 16a and second edge 17a also define zones of contact between the base 13 and the wall of the tread band 2 bounding the hole 4.

These contact zones of the base 13 are disposed on opposite sides with respect to the radial plane R of the tyre 1 passing through the longitudinal axis Z and are intended to counter the stresses on the pin 12 directed in the advancing direction Y or in the opposite direction.

The edges 16a, 17a extend longitudinally over a relatively small measurement with respect to the dimension perpendicular to the longitudinal axis Z such that the contact zones of the base 13 extend prevalently in a dimension substantially perpendicular to the advancing direction Y.

In the light of the above, the base 13 is asymmetrical with respect to the radial plane R passing through the longitudinal axis Z.

The stem 15 has a substantially circular configuration in plan view with a diameter for instance of between about 4 mm and about 5 mm.

The head 14, like the base 13, has a configuration in plan view of substantially trapezoidal shape, on which a first side 21, belonging to the first surface 10a, and an opposite second side 22, belonging to the second surface 10b, are defined. The first side 21 and second side 22 are preferably substantially parallel to the axis of rotation X of the tyre 1 and are joined together by opposite lateral flanks 23.

Unlike said base 13, however, the head 14 has a configuration in plan view which is rotated by 180° about the longitudinal axis Z with respect to that of the base 13.

The configuration in plan view of the head 14 is preferably shaped substantially as an isosceles trapezium with rounded vertices, in which the first side 21 of the head 14 represents the smaller base of the trapezium, the second side 22 of the head 14 represents the longer base of the trapezium and the lateral flanks 23 represent the sides of the trapezium.

Preferably, the second side 22 is larger than the first side 21 by a percentage of between about 20% and about 60%. The dimension of the first side 21 may for instance be between about 4 mm and about 7 mm, while the dimension of the second side 17 may be between about 6 mm and about 9 mm.

The distance between the first side 21 and the second side 22, representing the height of the trapezium, may be between about 5 mm and about 9 mm.

Preferably, the head 14 has a configuration in plan view having an area of dimensions reduced with respect to the area of the configuration in plan view of the base 13. This area may be reduced, for instance, by a proportional factor of between 1.2 and 2.5.

The first side 21, the second side 22 and the lateral flanks 23 of the configuration in plan view of the head 14 are defined respectively by a first radial surface 24, a second radial surface 25 and opposite lateral radial surfaces 26 extending along the longitudinal axis Z. The radial surfaces 24, 25, 26 may for instance extend longitudinally over a measurement of between about 3.5 mm and about 5.5 mm.

The radial surfaces 24, 25, 26 preferably have a concave portion of cylindrical type having an axis spaced from and substantially perpendicular to the longitudinal axis Z. In preferred configurations, they have a radius of curvature of between about 3 mm and about 17 mm.

Preferably, the walls of the hole 4 in contact with said radial surfaces 24, 25, 26 have a convex profile designed to match the concave profile of said surfaces.

Moreover, the front and rear radial surfaces 24 and 25, opposite one another with respect to the radial plane R and belonging respectively to the first surface 10a and the second surface 10b of the stud 10, respectively define zones of contact between the head 14 and the wall of the tread band 2 bounding the hole 4.

The pin 12 of the stud 10 is configured in a configuration in plan view which is not symmetrical at least with respect to an axis and is preferably elongate. As shown in Fig. 4, the configuration in plan view is non-symmetrical with respect to the direction shown by R which also represents the main direction of extension of the configuration in plan view of the pin 12. Preferably, the stud 10 is disposed within the respective hole 4 such that the main direction of extension R of the configuration in plan view of the pin 12 is substantially parallel to the axis of rotation X of the tyre 1.

The pin 12 may extend from the head 14 over a measurement for instance of between about 1 mm and about 1.5 mm.

The configuration in plan view of the pin 12 has a first side 30 and an opposite second side 31, belonging respectively to the first surface 10a and the second surface 10b of the stud 10.

The first side 30 has a discontinuous profile in which at least one tooth is defined. In the preferred configuration shown in the drawings, two teeth 32 and 33 are defined in the discontinuous profile of the first side 30. At least some of the studs 10 engaged in the holes 4 provided in the tread surface 3 of the tyre 1 are disposed such that the teeth 32, 33 face in a direction substantially opposite to the advancing direction Y. Other studs 10 may be partly disposed such that the teeth 32, 33 face in a direction substantially concordant with the advancing direction Y.

The second side 31 of the configuration in plan view of the pin 12 has a substantially planar profile. The studs 10 are preferably disposed such that the second side 31 is disposed substantially parallel to the axis of rotation X of the tyre 1. The second side 31 is part of a portion of substantially trapezoidal shape of the configuration in plan view of the pin, opposite the tips 32, 33.

For the production of the studded tyre 1, the holes 4 are preferably obtained during the stage of moulding and vulcanization of the tread band 2, by appropriately shaped pins extending radially from the inner walls of the mould.

The studs 10, made by a separate process, are then inserted in the holes 4, typically by means of a semi-automatic machine, which is known per se, such that the base 13 is housed in the hole 4 and bears on the base 4b and the pin 12 projects from the opening 4a of the hole 4.

The studs 10 are also inserted in the holes 4 with a predetermined orientation and guided by the first side 30 of the profile of the configuration in plan view of the pin 12. At least a first plurality of studs 10 is inserted in the respective holes such that the first side 30 of the profile of the pin 12 of the studs 10 of the first plurality faces in a direction substantially opposite to the advancing direction Y of the tyre. A second plurality of studs 10 may be inserted such that the first side 30 of the profile of the pin 12 of the studs 10 of the second plurality faces in a direction substantially concordant with the advancing direction Y of the tyre. In the first plurality of studs 10, the second side 31 of the profile of the pin 12 therefore faces in the advancing direction Y of the tyre. In the second plurality of studs 10, the second side 31 of the profile of the pin 12 therefore faces in a direction opposite to the advancing direction Y of the tyre.

The tyre 1 is mounted on a vehicle such that during the forward travel of the vehicle it rotates about the axis of rotation X. In the case of a directional tyre, it is mounted such that it rotates in the preferential rolling direction F.

During acceleration/deceleration (including braking) of the vehicle, and also when cornering and/or generally in the case of lateral stress , the pin 12 contacts the road surface, cutting any icy surface and causing a tangential stress on the stud 10.

This stress applied to a longitudinal end of said stud 10 may be assimilated with a force acting on the barycentre of the stud 10 combined with a pair of forces which tend to cause the stud 10 to oscillate about an axis of oscillation passing through its barycentre and substantially perpendicular to the longitudinal axis Z. In particular, in the case of traction/braking and therefore in the case of purely longitudinal forces, the axis of oscillation will be parallel to the axis of rotation X, while in the case of purely lateral forces, the axis of oscillation will be parallel to the advancing direction Y. In the most common case, there will be a combination of lateral and longitudinal forces, and the axis of oscillation will therefore have a given inclination with respect to the axis of rotation X and the direction Y.

This pair of forces which tends to cause the stud 10 to oscillate within the hole 4 is appropriately countered by the contact zones of said base 13 and the contact zones of said head 14.

In this way, the oscillating movement of the stud is very small, such that it can be accommodated by the wall of the hole 4, making use of the properties of deformability of the elastomer material of the tread band 2, and thus preventing any mutual movement between the stud 10 and the wall of the hole 4 which, over time, could cause the gradual wear of the latter.

In the preferred configuration shown in Figs. 2 to 6, the wide extension of the radial surfaces 24, 25 of the stud 10 also makes it possible even more effectively to counter the force acting on the barycentre of the stud 10.

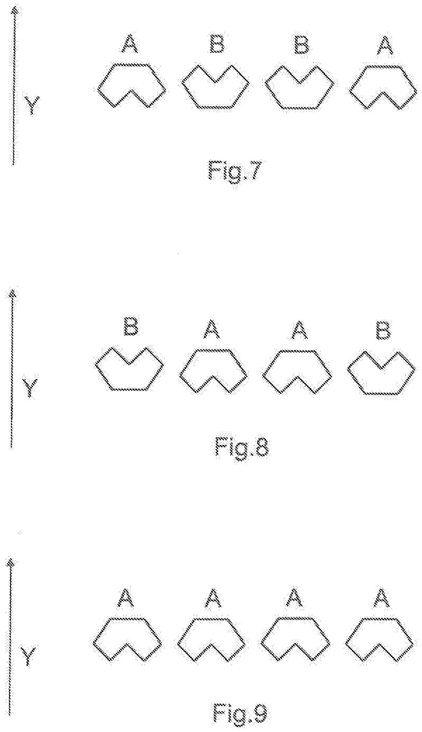

Figs. 7, 8 and 9 diagrammatically show some preferred configurations (or layouts) of the arrangement of the studs 10 in the tread band 2 of the tyre 1 of the present invention. The studs 10 are shown diagrammatically by means of the configuration in plan view of their pin 12. In the diagrammatic illustration shown in Figs. 7, 8 and 9, four adjacent pins are shown: the two central pins represent a plurality of studs disposed in a central portion of the tread band 2 of the tyre 1, while the lateral pins represent a plurality of studs disposed in lateral portions of the tread band 2 of the tyre 1 (said lateral portions being adjacent to the central portion and disposed towards the shoulder of the tyre). The two central pins may, for instance, represent a plurality of studs disposed in one or a plurality of rows of blocks disposed in the central portion of the tread band; the two lateral pins may represent a plurality of studs disposed in one or a plurality of rows of blocks disposed in the lateral portions of the tread band.

Fig. 7 shows a first arrangement in which a first plurality of studs A having pins with tips facing in a direction substantially opposite to the advancing direction Y of the tyre is disposed in lateral portions of the tread band, and a second plurality of studs B having pins with tips facing in a direction concordant with the advancing direction Y of the tyre is disposed in a central portion of the tread band.

Fig. 8 shows a second arrangement in which a first plurality of studs A having pins with tips facing in a direction substantially opposite to the advancing direction Y of the tyre is disposed in a central portion of the tread band, and a second plurality of studs B having pins with tips facing in a direction concordant with the advancing direction Y of the tyre is disposed in lateral portions of the tread band.

Fig. 9 shows a third arrangement in which the plurality of studs A having pins with tips facing in a direction substantially opposite to the advancing direction Y of the tyre is disposed in all portions of the tread band.

Other arrangements in which some of the studs are disposed such that the tooth or teeth of the pin substantially face in the direction opposite to the advancing direction Y of the tyre are possible. The illustrations of Figs. 7, 8 and 9 are no more than possible examples.

### Examples

The Applicants have conducted a series of handling tests on snow with a VW Golf car equipped with 205/55 R16 tyres comprising studs embodied in accordance with the preceding specification.

Tyres in which said studs were inserted in the holes provided in the surface of the tread band in various arrangements were in particular tested.

In a first arrangement (layout 1 - comparison), all the studs were inserted such that the teeth of the pin faced in the advancing direction of the tyre, in all portions of the tread.

In a second arrangement (layout 2 - invention), the studs were inserted such that the teeth of the pin faced in the advancing direction of the tyre in the central portion of the tread, and in the direction opposite to the advancing direction of the tyre in the lateral portions of the tread. In particular, of the total of 130 studs inserted in the tread of each tyre, 68 studs were positioned such that the teeth of the pin faced in the direction opposite to the advancing direction of the tyre.

In a third arrangement (layout 3 - invention), the studs were inserted such that the teeth of the pin faced in the direction opposite to the advancing direction of the tyre in the central portion of the tread, and in the advancing direction of the tyre in the lateral portions of the tread. In particular, of the total of 130 studs inserted in the tread of each tyre, 62 studs were positioned such that the teeth of the pin faced in the direction opposite to the advancing direction of the tyre.

In a fourth arrangement (layout 4 - invention), all the studs were inserted such that the teeth of the pin faced in the direction opposite to the advancing direction of the tyre, in all portions of the tread.

Table 1 summarizes the results of a traction and braking test (carried out on a vehicle fitted with instruments) on an icy surface, taking the performance of tyres equipped with conventional studs as a reference. Starting traction from stationary and the braking distance from a speed of 50 km/h to 0 km/h were measured for the test.

**Table 1**

| | Traction | Braking |
|---|---|---|
| Comparison: Layout 1 | 103 | 113 |
| Invention: Layout 2 | 111 | 114 |
| Invention: Layout 3 | 107 | 119 |
| Invention: Layout 4 | 107 | 121 |

As can be seen, all the layouts 2-4 in which at least some of the studs had pins with teeth facing in the direction opposite to the advancing direction of the tyre obtained better results in terms of performance during both traction and braking than layout 1 in which all the teeth had pins with teeth facing in the direction concordant with the advancing direction of the tyre.

The following Table 2 summarises the results of the subjective handling tests assessed (in respect of various factors) by a professional tester on an icy surface.

**Table 2**

| | Layout 1 | Layout 2 | Layout 3 | Layout 4 |
|---|---|---|---|---|
| Traction | 7 | 7 | 6.5 | 6.5 |
| Braking efficiency | 7 | 7 | 6.5 | 6.5 |
| Skid effect | 7 | 7 | 6.5 | 6.5 |
| Steerability | 7 | 7 | 6.5 | 6 |
| Understeering | 7 | 7 | 6.5 | 6 |
| Oversteering | 6 | 7 | 6 | 6 |
| Progression of loss of grip | 6.5 | 7 | 6 | 6 |
| Recovery | 6 | 6.5 | 6 | 6 |
| Lateral grip | 6 | 7 | 6 | 6 |

Table 3 summarises the results of the subjective handling tests assessed (in respect of various factors) by a professional tester on a snow-covered surface.

**Table 3**

| | Layout 1 | Layout 2 | Layout 3 | Layout 4 |
|---|---|---|---|---|
| Traction | 7.5 | 7.5 | 7 | 7 |
| Braking efficiency | 7.5 | 7.5 | 7 | 7 |
| Steerability | 7 | 7 | 6.5 | 6.5 |
| Understeering | 7 | 7.5 | 7 | 6.5 |
| Oversteering | 6.5 | 7 | 6.5 | 6.5 |
| Progression of loss of grip | 7 | 7 | 7 | 6.5 |
| Recovery | 6.5 | 7 | 6.5 | 6.5 |
| Lateral grip | 7 | 7 | 6.5 | 6.5 |

The results shown in Tables 2 and 3 show that layout 2 was clearly better, making it possible to provide the vehicle with optimum handling on both icy and snow-covered surfaces, although it did not have the best results in absolute terms in terms of traction and braking (see Table 1). Layouts 3 and 4 enabled adequate handling, but performed better in terms of traction and braking (see Table 1).

Depending on requirements, a designer can obviously choose the best configuration depending on the type(s) of performance that are considered most important.

## Claims

1. A studded tyre (1) comprising:
- a tread band (2) on which a tread surface (3) of said tyre is defined,
- a plurality of holes (4) provided on said tread band (2) and open on said tread surface (3) in which a corresponding plurality of studs (10) is housed in engagement, each stud comprising a body (11) housed in one of said holes, and a pin (12) projecting from said tread band (2) externally to said hole (4),
wherein
- said pin (12) has a configuration in plan view which is not symmetrical at least with respect to an axis, comprising a first side (30) having a profile on which at least one tip (32, 33) is defined, and a second side (31) having a substantially planar profile, said second side (31) being opposite said first side,
- said plurality of studs (10) comprises a first plurality of studs (A), wherein the pins of the studs (10) of said first plurality have their respective tips (32, 33) facing in a direction substantially opposite to an advancing direction (Y) of said tyre (1),
- said body (11) of each stud (10) of said plurality of studs comprises a base (13), longitudinally opposite said pin (12) and housed in a radially inner position of the respective hole (4),
- said pin (12) extends longitudinally from a head (14) of said body (11) of each stud (10) of said plurality of studs, said head being housed in said hole (4) in a radially outer position with respect to said base (13) of said stud, and
- said head (14) has a configuration in plan view analogous to that of said base (13) and is rotated by substantially 180° about a longitudinal axis (Z) of said stud (10) with respect to the configuration in plan view of said base (13),
wherein the configuration in plan view means the orthogonal projection in a plane perpendicular to a longitudinal axis of the stud.

2. A tyre according to claim 1, wherein said plurality of studs (10) comprises a second plurality of studs (B), wherein the pins of the studs (10) of said second plurality have their respective tips (32, 33) facing substantially towards said advancing direction (Y) of said tyre (1).

3. A tyre according to claim 1 or 2, wherein said first plurality of studs (A) is positioned in lateral portions of said tread band (2).

4. A tyre according to claim 2 or 3, wherein said second plurality of studs (B) is positioned in a central portion of said tread band (2).

5. A tyre according to any one of the preceding claims, wherein said first side (30) of the configuration in plan view of said pin (12) has a profile on which at least two tips (32, 33) are defined.

6. A tyre according to any one of the preceding claims, wherein said second side (31) of the configuration in plan view of said pin (12) is included in a portion of substantially trapezoidal shape of said configuration in plan view of said pin (12) opposite said at least one tip (32, 33).

7. A tyre according to any one of the preceding claims, wherein said configuration in plan view of said pin (12) is elongate and has a main direction of extension, and wherein each stud (10) of said plurality of studs is positioned such that said main direction of extension extends substantially parallel to an axis of rotation (X) of said tyre (1).

8. A tyre according to any one of the preceding claims, wherein said base has a configuration in plan view on which a first side (16) and an opposite second side (17) are defined and disposed substantially parallel to an axis of rotation (X) of said tyre.

9. A tyre according to claim 8, wherein said base (13) has a substantially trapezoidal configuration in plan view, said first side (16) of said base (13) representing a longer base of said trapezium and said second side (17) representing a shorter base of said trapezium.

10. A tyre according to claim 8 or 9, wherein said first side (30) of said configuration in plan view of said pin (12) is disposed in a direction concordant with said first side (16) of said base (13).

11. A tyre according to any one of the preceding claims, wherein said head has a configuration in plan view in which a first side (21) and an opposite second side (22) are defined and disposed substantially parallel to said axis of rotation (X) of said tyre.

12. A tyre according to claim 11, wherein said first side (21) of said head has a smaller extension than said second side (22) of said head.

13. A tyre according to claim 11 or 12, wherein said head (14) has a substantially trapezoidal configuration in plan view, said first side (21) of said head representing a shorter base of said trapezium and said second side (22) of said head representing a longer base of said trapezium.

14. A tyre according to any one of claims 11 to 13, wherein said first side (30) of said configuration in plan view of said pin (12) is disposed in a direction concordant with said first side (21) of said head (14).

15. A tyre according to any one of the preceding claims , wherein said head (14) has a configuration in plan view having an area of dimensions reduced by a proportional factor of between about 1.2 and about 2.5 with respect to the area of the configuration in plan view of said base (13).

## Patentansprüche

1. Spikereifen (1, 200) umfassend:
- einen Laufflächenring (2), an dem eine Lauffläche (3) des Reifens definiert ist,
- eine Vielzahl von Löchern (4), die an dem Laufflächenring (2) vorgesehen sind und sich zu der Lauffläche (3) öffnen und in welchen sich eine entsprechende Vielzahl von Spikes (10) in Eingriff untergebracht ist, wobei jeder Spike einen Körper (11) umfasst, der in einem der Löcher aufgenommen ist, und einen Stift (12), der von dem Laufflächenring (2) außerhalb des Lochs (4) wegragt, wobei
- wobei der Stift (12) in der Draufsicht eine Konfiguration aufweist, die zumindest in Bezug auf eine Achse nicht symmetrisch ist, umfassend eine erste Seite (30) mit einem Profil, an dem zumindest eine Spitze (32, 33) definiert ist, und eine zweite Seite (31) mit einem im Wesentlichen ebenen Profil, wobei die zweite Seite (31) der ersten Seite entgegengesetzt ist,
- wobei die Vielzahl von Spikes (10) eine erste Vielzahl von Spikes (A) umfasst, wobei die Stifte der Spikes (10) der ersten Vielzahl ihre jeweiligen Spitzen (32, 33) in einer Richtung im Wesentlichen einer Fahrrichtung (Y) des Reifens (1) entgegengesetzt weisend aufweisen,
- wobei der Körper (11) jedes Spikes (10) der Vielzahl von Spikes eine Basis (13) umfasst, die dem Stift (12) in der Längsrichtung entgegengesetzt ist und in einer radial inneren Position des jeweiligen Lochs (4) aufgenommen ist,
- wobei der Stift (12) sich der Länge nach von einem Kopf (14) des Körpers (11) des Spikes (10) der Vielzahl von Spikes erstreckt, wobei der Kopf in dem Loch (4) in einer radial äußeren Position in Bezug auf die Basis (13) des Spikes untergebracht ist, und
- wobei der Kopf (14) in der Draufsicht eine Konfiguration analog zu jener der Basis (13) aufweist, und im Wesentlichen 180° um eine Längsachse (Z) des Spikes (10) in Bezug auf die Konfiguration in Draufsicht der Basis (13) gedreht ist, wobei Konfiguration in Draufsicht die orthogonale Projektion in einer Ebene senkrecht auf die Längsachse des Spikes bedeutet.

2. Reifen nach Anspruch 1, wobei die Vielzahl von Spikes (10) eine zweite Vielzahl von Spikes (B) umfasst, wobei die Stifte der Spikes (10) der zweiten Vielzahl ihre jeweiligen Spitzen (32, 33) im Wesentlichen in die Fahrtrichtung (Y) des Reifens (1) weisen.

3. Reifen nach Anspruch 1 oder 2, wobei die erste Vielzahl von Spikes (A) in seitlichen Abschnitten des Laufflächenrings (2) positioniert ist.

4. Reifen nach Anspruch 2 oder 3, wobei die zweite Vielzahl von Spikes (B) in einem zentralen Abschnitt des Laufflächenrings (2) positioniert ist.

5. Reifen nach einem der vorhergehenden Ansprüche, wobei die erste Seite (30) der Konfiguration in der Draufsicht des Stifts (12) ein Profil aufweist, in dem zumindest zwei Spitzen (32, 33) definiert sind.

6. Reifen nach einem der vorhergehenden Ansprüche, wobei die zweite Seite (31) der Konfiguration in Draufsicht des Stifts (12) in einem Abschnitt einer im Wesentlichen trapezförmigen Gestalt der Konfiguration in Draufsicht des Stifts (12) der zumindest einen Spitze (32, 33) gegenüberliegend eingeschlossen ist.

7. Reifen nach einem der vorhergehenden Ansprüche, wobei die Konfiguration in Draufsicht des Stifts (12) länglich ist und eine Haupterstreckungsrichtung aufweist, und wobei jeder Spike (10) der Vielzahl von Spikes so positioniert ist, dass eine Haupterstreckungsrichtung sich im Wesentlichen parallel zu einer Drehachse (X) des Reifens (1) erstreckt.

8. Reifen nach einem der vorhergehenden Ansprüche, wobei die Basis eine Konfiguration in Draufsicht aufweist, an der eine erste Seite (16) und eine entgegengesetzte zweite Seite (17) definiert und im Wesentlichen parallel zu einer Drehachse (X) des Reifens angeordnet sind.

9. Reifen nach Anspruch 8, wobei die Basis (13) eine im Wesentlichen trapezförmige Konfiguration in Draufsicht aufweist, wobei die erste Seite (16) der Basis (13) eine längere Basis des Trapezes darstellt, und die zweite Seite (17) eine kürzere Basis des Trapezes darstellt.

10. Reifen nach Anspruch 8 oder 9, wobei die erste Seite (30) der Konfiguration in Draufsicht des Stifts (12) in einer Richtung angeordnet ist, die mit der ersten Seite (16) der Basis (13) zusammenfällt.

11. Reifen nach einem der vorhergehenden Ansprüche, wobei der Kopf eine Konfiguration in Draufsicht aufweist, in der eine erste Seite (21) und eine entgegengesetzte zweite Seite (22) definiert und im Wesentlichen parallel zu der Drehachse (X) des Reifens angeordnet sind.

12. Reifen nach Anspruch 11, wobei die erste Seite (21) des Kopfs eine geringere Erstreckung als eine zweite Seite (22) des Kopfs aufweist.

13. Reifen nach Anspruch 11, wobei der Kopf (14) eine im Wesentlichen trapezförmige Konfiguration in Draufsicht aufweist, wobei die erste Seite (14) des Kopfs (21) eine kürzere Basis des Trapezes darstellt, und die zweite Seite (22) des Kopfs eine kürzere Basis des Trapezes darstellt.

14. Reifen nach einem der Ansprüche 11 bis 13, wobei die erste Seite (30) der Konfiguration in Draufsicht des Stifts (12) in einer Richtung angeordnet ist, die mit der ersten Seite (21) des Kopfs (14) zusammenfällt.

15. Reifen nach einem der vorhergehenden Ansprüche, wobei der Kopf (14) eine Konfiguration in Draufsicht aufweist, die eine Fläche mit Dimensionen aufweist, die um einen proportionalen Faktor von zwischen etwa 1,2 und etwa 2,5 in Bezug auf die Fläche der Konfiguration in Draufsicht der Basis (13) verringert sind.

## Revendications

1. Pneu à crampons (1) comprenant :
- une bande de roulement (2) sur laquelle une surface de roulement (3) dudit pneu est définie,
- une pluralité de trous (4) prévus sur ladite bande de roulement (2) et ouverts sur ladite surface de roulement (3) dans laquelle une pluralité de crampons correspondante (10) est reçue en prise, chaque crampon comprenant un corps (11) reçu dans l'un desdits trous, et une broche (12) faisant saillie de ladite bande de roulement (2) à l'extérieur dudit trou (4),
dans lequel
- ladite broche (12) a une configuration vue en plan qui n'est pas symétrique au moins par rapport à un axe, comprenant un premier côté (30) ayant un profil sur lequel au moins une pointe (32, 33) est définie, et un deuxième côté (31) ayant un profil essentiellement plan, ledit deuxième côté (31) étant opposé audit premier côté,
- ladite pluralité de crampons (10) comprend une première pluralité de crampons (A), où les broches des crampons (10) de ladite première pluralité ont leurs pointes respectives (32, 33) orientées dans une direction essentiellement opposée à une direction d'avance (Y) dudit pneu (1),
- ledit corps (11) de chaque crampon (10) de ladite pluralité de crampons comprend une base (13), longitudinalement opposée à ladite broche (12) et reçue dans une position radialement interne du trou respectif (4),
- ladite broche (12) s'étend longitudinalement depuis une tête (14) dudit corps (11) de chaque crampon (10) de ladite pluralité de crampons, ladite tête étant reçue dans ledit trou (4) dans une position radialement externe par rapport à ladite base (13) dudit crampon, et
- ladite tête (14) a une configuration vue en plan analogue à celle de ladite base (13) et est tournée d'essentiellement 180° autour d'un axe longitudinal (Z) dudit crampon (10) par rapport à la configuration vue en plan de ladite base (13), où la configuration vue en plan signifie la projection orthogonale dans un plan perpendiculaire à un axe longitudinal du crampon.

2. Pneu selon la revendication 1, dans lequel ladite pluralité de crampons (10) comprend une deuxième pluralité de crampons (B), où les broches des crampons (10) de ladite deuxième pluralité ont leurs pointes respectives (32, 33) orientées essentiellement vers ladite direction d'avance (Y) dudit pneu (1).

3. Pneu selon la revendication 1 ou 2, dans lequel ladite première pluralité de crampons (A) est positionnée dans des parties latérales de ladite bande de roulement (2) .

4. Pneu selon la revendication 2 ou 3, dans lequel ladite deuxième pluralité de crampons (B) est positionnée dans une partie centrale de ladite bande de roulement (2).

5. Pneu selon l'une quelconque des revendications précédentes, dans lequel ledit premier côté (30) de la configuration vue en plan de ladite broche (12) présente un profil sur lequel au moins deux pointes (32, 33) sont définies.

6. Pneu selon l'une quelconque des revendications précédentes, dans lequel ledit deuxième côté (31) de la configuration vue en plan de ladite broche (12) est inclus dans une partie de forme essentiellement trapézoïdale de ladite configuration vue en plan de ladite broche (12) opposée à ladite au moins une pointe (32, 33).

7. Pneu selon l'une quelconque des revendications précédentes, dans lequel ladite configuration vue en plan de ladite broche (12) est allongée et a une direction d'extension principale, et dans lequel chaque crampon (10) de ladite pluralité de crampons est positionné de sorte que ladite direction d'extension principale s'étende essentiellement parallèlement à un axe de rotation (X) dudit pneu (1).

8. Pneu selon l'une quelconque des revendications précédentes, dans lequel ladite base a une configuration vue en plan sur laquelle un premier côté (16) et un deuxième côté opposé (17) sont définis et disposés essentiellement parallèlement à un axe de rotation (X) dudit pneu.

9. Pneu selon la revendication 8, dans lequel ladite base (13) a une configuration vue en plan essentiellement trapézoïdale, ledit premier côté (16) de ladite base (13) représentant une base plus longue dudit trapèze et ledit deuxième côté (17) représentant une base plus courte dudit trapèze.

10. Pneu selon la revendication 8 ou 9, dans lequel ledit premier côté (30) de ladite configuration vue en plan de ladite broche (12) est disposé dans une direction concordante avec ledit premier côté (16) de ladite base (13) .

11. Pneu selon l'une quelconque des revendications précédentes, dans lequel ladite tête a une configuration vue en plan dans laquelle un premier côté (21) et un deuxième côté opposé (22) sont définis et disposés essentiellement parallèlement audit axe de rotation (X) dudit pneu.

12. Pneu selon la revendication 11, dans lequel ledit premier côté (21) de ladite tête a une extension plus petite que celle dudit deuxième côté (22) de ladite tête.

13. Pneu selon la revendication 11 ou 12, dans lequel ladite tête (14) a une configuration vue en plan essentiellement trapézoïdale, ledit premier côté (21) de ladite tête représentant une base plus courte dudit trapèze et ledit deuxième côté (22) de ladite tête représentant une base plus longue dudit trapèze.

14. Pneu selon l'une quelconque des revendications 11 à 13, dans lequel ledit premier côté (30) de ladite configuration vue en plan de ladite broche (12) est disposé dans une direction concordante avec ledit premier côté (21) de ladite tête (14).

15. Pneu selon l'une quelconque des revendications précédentes, dans lequel ladite tête (14) a une configuration vue en plan ayant une surface de dimensions réduites d'un facteur proportionnel compris entre environ 1,2 et environ 2,5 par rapport à la surface de la configuration vue en plan de ladite base (13).
